# EUROPEAN PATENT APPLICATION

(11) **EP 0 574 764 A2**
(43) Date of publication of application: **22.12.1993**
(21) Application number: 93108761.3
(22) Date of filing: 01.06.1993
(51) Int. Cl.: A23G 1/02, A23G 1/04

(54) **Drying of alkalised cocoa mass**

(30) Priority: 19.06.1992 US 910257
(71) Applicant: SOCIETE DES PRODUITS NESTLE S.A., CH-1800 Vevey (CH)
(72) Inventor: Mazurek, Robert John, Fulton, NY 13069 (US); Rusin, George, Auburn, NY 13021 (US)
(74) Representative: Pate, Frederick George

(57) **Abstract**

A process for drying an alkalised cocoa material obtained by alkalising a cocoa source which comprises passing the alkalised cocoa material through a swept surface or thin film evaporator under vacuum.

## Description

The present invention relates to the processing of cocoa, more particularly to drying cocoa.

In the production of soluble cocoa, the cocoa beans are first cleaned to remove filth (stones, strings, earth etc), roasted, cooled, cracked and winnowed to remove the shells and germs to give the nibs which contain 55% cocoa butter. The nibs are then subjected to pregrinding which ruptures the cells to give a fluid mass which represents the chocolate liquor where solid particles are suspended in a continuous fatty phase - the cocoa butter which is liquid above 34°C. The chocolate liquor is converted into a pure paste by fine grinding and the cocoa butter is separated by hydraulic pressing to leave a pressed cake from which cocoa powder is prepared.

FR-A 2445698 describes a process for solubilising or alkalising cocoa in which process, steam and a concentrated solution of an alkali carbonate are continuously injected under pressure into the cocoa mass in a tube, the carbonate is left to react with the cocoa mass for 30 to 80 seconds at a temperature of at least 120°C, the mixture is subjected to sudden expansion and then dried with stirring. A major disadvantage of this process is that drying is stated to require from 1 to 1.5 hours.

EP-A 66304 describes a cocoa powder which is obtained by alkalising cocoa powder with approximately 75% water for 4 to 24 hours at a temperature of from 65 to 90°C, the water being replaced as its evaporates. A major disadvantage of this process is that it involves a long drying time in view of the quantities of water added during the alkalising process.

EP-A-226727 describes a process for alkalising cocoa in the aqueous phase in which alkalisation is carried out with an alkaline compound in a concentration of 1 to 3% by weight, based on the weight of the cocoa, and the water is subsequently evaporated, characterised in that alkalisation is carried out in a single step with an alkaline compound selected from sodium, potassium, ammonium or magnesium hydroxide or carbonate over a period of 30 mins. to 4 hours under a pressure of 1 to 3 atmospheres and at a temperature below 110°C. The evaporation of the water is stated to require 1.5 to 2 hours.

The dryers used for evaporation of the water in these prior processes are conventional batch type dryers which are essentially stirred jacketed vessels which are suitable for drying viscous materials such as the alkaline cocoa mass.

Thin film evaporators are normally used to dry low viscosity materials but we have found, surprisingly, that by using a swept surface or a thin film evaporator under vacuum for drying the viscous alkaline cocoa mass significant advantages are obtained over the use of conventional jacketed batch mixers. One major advantage is that the drying time can be reduced dramatically from more than 1 hour to less than 1 minute. Another advantage is that very large thin film or swept surface evaporators can be built at a low cost whereas batch mixers above a certain size are not very practical because their volume increases faster than their surface area.

Accordingly, the present invention provides a process for drying an alkalised cocoa material obtained by alkalising a cocoa source which comprises passing the alkalised cocoa material through a swept surface or thin film evaporator under vacuum.

The alkalised cocoa material is usually in the form of a liquid or a pumpable viscous mass such as a highly viscous paste. The amount of water in the alkalised cocoa material may vary from 5 to 100%, preferably from 10 to 75% by weight based on the weight of the cocoa source.

The swept surface and thin film evaporators are suitable for drying the alkalised cocoa material whether it is prepared by batch or continuous alkalisation processes.

The absolute pressure at which the alkalised cocoa material is dried under vacuum may be up to 300 mm Hg, preferably from 0.1 to 100 mm Hg, and especially from 40 mm to 90 mm Hg. The drying may be carried out within a very short period of time, for instance, from 10 seconds to 5 minutes and more usually from 20 seconds to 2 minutes. The drying is preferably carried out at a temperature of from 70° to 150°C, preferably from 80° to 120°C and especially from 90° to 110°C. The final moisture content of the alkalised cocoa material may be less than 5%, preferably less than 3% by weight.

The alkalised cocoa material may be obtained by conventional alkalisation methods from a cocoa source such as the nibs, the liquor, the pure paste or the cake.

The alkaline compound used for alkalising the cocoa source may be the sodium, potassium, ammonium or magnesium hydroxide or carbonate, preferably potassium hydroxide. The amount of alkaline compound is usually from 1 to 5%, preferably from 1.5 to 4% and especially from 2 to 3% by weight based on the weight of the cocoa source. The alkaline compound is conveniently dissolved in water before its incorporation into the cocoa source, advantageously by injecting steam into the alkaline compound so that the amount of water in the alkalisation process may vary from 5 to 100% and preferably from 10 to 75% by weight based on the weight of cocoa source.

Generally, the cocoa source and the alkaline compound are introduced into a closed vessel for the alkalising treatment, care being taken at the beginning of the treatment to allow the carbon dioxide formed to escape, and the treatment is conveniently continued with vigorous stirring in the closed vessel under a pressure from atmospheric to 5 bar. In order to create this excess pressure, air, compressed air or an oxygen-containing gas mixture is introduced into the treatment mixture throughout or during part of the alkalisation time.

The process of the invention enables increased capacities to be achieved and a much shorter drying time when compared with conventional processes.

The cocoa thus obtained has an excellent flavour and is free from the alkaline taste characteristic of cocoas obtained by known processes. On completion of the drying, the cocoa mass is conventionally treated to convert it into cakes and cocoa powder for marketing.

The cocoa powder thus obtained may of course be used for numerous applications, e.g. for chocolate-flavoured beverages, in chocolate manufacture, in confectionary, in deep-frozen foods and other applications for which its advantages as explained above make it highly desirable.

The process according to the invention will now be illustrated by the following Examples.

### Example 1

An alkalised cocoa material containing 17.5% by weight of water based on the weight of alkalised cocoa material was passed to a swept surface evaporator (CONVAP) and evaporation of the water took place under an absolute pressure of 90 mm Hg at 98°C in 30 seconds to give a cocoa mass having a final moisture content of 1.27% by weight.

A cocoa powder produced from the dried cocoa material by conventional procedures had an excellent taste and aroma.

### Example 2

An alkalised cocoa mass containing 58% by weight of water based on the weight of the alkalised cocoa material was fed into a thin film evaporator with a swept surface (Turba Film Processor) and evaporation of the water took place under an absolute pressure of 65 mm Hg at 97°C in 30 seconds resulting in a final moisture content of the cocoa mass of 1.2% by weight.

### Example 3

A similar procedure to that described in Example 2 was followed except that the alkalisation was carried out for 1 minute instead of 30 seconds and evaporation of the water took place under an absolute pressure of 50 mm Hg to give a cocoa mass having a final moisture content of 0.99% by weight.

A cocoa powder produced from the cocoa mass by conventional procedures had an excellent taste and aroma.

## Claims

1. A process for drying an alkalised cocoa material obtained by alkalising a cocoa source which comprises passing the alkalised cocoa material through a swept surface or thin film evaporator under vacuum.

2. A process according to claim 1 wherein the alkalised cocoa material is in the form of a liquid or a pumpable viscous mass.

3. A process according to claim 1 wherein the alkalised cocoa material is in the form of a highly viscous paste.

4. A process according to claim 1 wherein the amount of water in the alkalised cocoa material is from 5 to 100% by weight based on the weight of the cocoa source.

5. A process according to claim 1 wherein the absolute pressure at which the alkalised cocoa material is dried under vacuum is from 0.1 mm to 100 mm Hg.

6. A process according to claim 1 wherein the drying is carried out over a period of from 10 seconds to 5 minutes.

7. A process according to claim 1 wherein the drying is carried out at a temperature from 70° to 150°C.

8. A process according to claim 1 wherein the drying is carried out at a temperature from 80° to 120°C.

9. A process according to claim 1 wherein the dried alkalised cocoa material is converted into a cocoa powder or cake.

10. A dried alkalised cocoa material whenever prepared by a process according to claim 1.
